# EUROPÄISCHE PATENTSCHRIFT

(11) **EP 2 365 197 B1**
(45) Veröffentlichungstag und Bekanntmachung des Hinweises auf die Patenterteilung: **23.11.2016**
(21) Anmeldenummer: 11153788.2
(22) Anmeldetag: 09.02.2011
(51) Int. Cl.: F02C 7/12, F01D 21/06, F01D 25/08

(54) **Beschleunigte Kühlung einer Gasturbine**
Accelerated cooling of a gas turbine
Refroidissement accéléré d'une turbine à gaz

(30) Priorität: 02.03.2010 CH 2682010
(43) Veröffentlichungstag der Anmeldung: 14.09.2011
(73) Patentinhaber: General Electric Technology GmbH, 5400 Baden (CH)
(72) Erfinder: Pauli, Ernst, CH-8057, Zürich (CH); Derksen, Alexander, D-73230 Kirchheim unter Teck (DE)
(74) Vertreter: Bernotti, Andrea

(56) Entgegenhaltungen:
- EP-A1- 0 961 011
- EP-A1- 1 591 628
- EP-A1- 1 630 356
- US-A1- 2003 035 714

## Beschreibung

### Technisches Gebiet

Die Erfindung betrifft ein Verfahren zum Betrieb einer Gasturbine.

### Stand der Technik

Im Betrieb von Gasturbinen wechseln Phasen von Lastbetrieb und Stillstand oder Wartungsphasen ab. Besonders die Wartungsphasen werden oft dadurch behindert oder verzögert, dass eine Abkühlung der Gasturbine abgewartet werden muss, bevor diese zugänglich wird.

Es ist bekannt, dass im Anschluss an den Betrieb einer Gasturbine der Rotor mit geringer Drehzahl angetrieben wird, um die durch den Betrieb aufgeheizte Gasturbine schneller abzukühlen. Durch die Rotation des Rotors und der an ihm angeordneten Laufschaufeln wird durch den Strömungskanal des Verdichters, durch die Brennkammer und die Turbine kühle Umgebungsluft gepumpt. Diese nimmt beim Durchströmen die in der Gasturbine, insbesondere die im Gehäuse und im Rotor, gespeicherte Wärme auf und transportiert sie ab. Hierdurch kühlt die Gasturbine schneller ab, so dass Service- bzw. Wartungsarbeiten früher angefangen werden können. Es ist ein allgemeines Bestreben, die Stillstandszeiten einer Gasturbine zu verringern, um deren Verfügbarkeit zu erhöhen.

Jedes Abstellen einer Gasturbine stellt für die Heissteile und alle Strukturteile, die während des Betriebes erwärmt werden eine zyklische thermische Belastung dar. Durch die schnellere Abkühlung werden in der Gasturbine Temperaturgradienten und entsprechende Thermospannungen erzeugt. Weiter führt eine schnelle Abkühlung zu einer höheren zyklischen Belastungen der erwärmten Teile, was die Lebensdauer der Gasturbine reduziert. Es besteht bei dem Abkühlen einer Gasturbine ein Widerspruch zwischen der Forderung nach einem schnellen Abkühlen, um die Gasturbine für eine Inspektion oder Wartung zugänglich zu machen, und dem Anspruch nach langer Lebensdauer der Gasturbine.

Nach heutiger Vorgehensweise wird die Abkühlung mit einer Drehzahl durchgeführt, die eine Abkühlung mit möglichst geringer Bauteilbelastung erlaubt.

Um das Abkühlen zu beschleunigen ist in der WO2006/021520 vorgeschlagen worden, während der Abkühlphase zumindest zeitweise eine Flüssigkeit vor dem Verdichter in den Ansaugluftstrom einzubringen, welcher zur Kühlung den Strömungskanal des Verdichters, die Brennkammer und die Turbine der Gasturbine durchströmt. Zum Einbringen der Flüssigkeit wird dabei eine Eindüsevorrichtung verwendet, wie sie für "Wet Compression" oder "High Fogging" bekannt ist. Bei diesem Verfahren wird anscheinend mit Ziel einer schnelleren Abkühlung eine höhere thermische Belastung in Kauf genommen.

Die bekannten Verfahren zum Abkühlen einer Gasturbine führen entweder zu langen Abkühlzeiten oder hohen thermischen Belastungen der Bauteile und damit verbundenen Lebensdauereinbussen und entsprechend reduzierten Wartungsinterwallen. Beides reduziert die Verfügbarkeit des Kraftwerkes zur Stromproduktion und führt zu höheren spezifischen Kosten.

Die US2003/035714 offenbart ein Verfahren zum Abstellen einer Gasturbine, bei dem der Gasturbine während dem Auslaufen abhängig von ihrer Drehzahl Kühlluft zugeführt wird. In EP 1630356 A1 wird ein Abkühlverfahren offenbart, in dem zeitweise eine Flüssigkeit eingebracht wird.

### Darstellung der Erfindung

Der vorliegenden Erfindung ist die Aufgabe gestellt, ein Verfahren zum Abkühlen einer Gasturbine anzugeben, dass ein schnelleres Abkühlen der Gasturbine mit kontrollierter Lebensdauereinbusse erlaubt.

Erfindungsgemäss wird diese Aufgabe durch den Gegenstand der unabhängigen Ansprüche gelöst. Vorteilhafte Ausführungsformen sind Gegenstand der abhängigen Ansprüche.

Der Kern der Erfindung ist ein Verfahren, bei welchem im Anschluss an den Betrieb der Gasturbine eine Kühldrehzahl als Funktion mindestens einer kritischen Temperatur und/ oder der Zeit geregelt wird. Die Kühldrehzahl wird dabei in Abhängigkeit von der mindestens einen kritischen Temperatur zur Realisierung einer schnellen Abkühlung so hoch gehalten, wie es die resultierende thermische und/ oder zyklische Belastung erlaubt.

Bei dem herkömmlich Verfahren zum schnellen Abkühlen einer Gasturbine, auch als "forced cooling" bezeichnet, wird mit einer konstanten Kühldrehzahl abgekühlt. Dabei wird die maximale thermische Belastung am Anfang der Kühlperiode erreicht. Am Anfang des Kühlvorgangs sind die Metalltemperaturen am höchsten. Die Kühllufttemperatur, dass heisst die Temperatur der zur Kühlung durch die Gasturbine geleiteten Luft, ist nahe der Ansaugtemperatur der aus der Umgebung angesaugten Luft. Diese Temperatur ist in erster Näherung während des Kühlvorgangs konstant. Der Kühlluftmassenstrom, dass heisst der Ansaugmassenstrom der Gasturbine, ist bei konstanter Kühldrehzahl während des Kühlvorgangs ebenfalls praktisch konstant. Die abgeführte Wärme ist proportional zur Differenz zwischen Metall- und Kühllufttemperatur. Diese ist am Anfang des Kühlvorgangs am höchsten und führt damit zu den höchsten Temperaturgradienten im Material und der schnellsten Abkühlung. Über die Zeit nehmen die Metalltemperaturen und die resultierenden Temperaturgradienten ab. Damit wird auch die thermische Belastung kleiner. Sobald die Belastung abnimmt, wird die Kühlung damit herkömmlicherweise langsamer durchgeführt, als zulässig wäre.

Eine Möglichkeit die Kühlung zu beschleunigen besteht in der Erhöhung des Kühlluftmassenstroms. Dies kann durch eine Erhöhung der Kühldrehzahl realisiert werden. Ziel ist es dabei die Limite der thermischen Belastung nicht zu überschreiten, aber während des Kühlvorganges möglichst lange an diesen Limiten zu fahren, um einen schnelle Kühlung zu realisieren. Dabei müssen verschiedene Bauteile während des Abkühlvorganges berücksichtigt werden. Das begrenzende, kritischste Bauteil kann während des Abkühlvorganges wechseln.

Beispielsweise kann zunächst ein dünnes Bauteil, wie ein Brennkammerblech, das schnell abkühlt, begrenzend sein. Ein weiteres, Bauteil, wie beispielsweise der Rotor oder ein dickes Gehäuseteil, kühlt deutlich langsamer ab und kann später limitierend werden, wenn das erste Bauteil schon auf eine unkritische Temperatur abgekühlt ist.

In einer Ausführung wird die Kühldrehzahl als Funktion von einer oder mehreren kritischen Bauteiltemperaturen oder kritischen Temperaturgradienten geregelt. Typischerweise ist die Drehzahl umgekehrt proportional zu einer kritischen Temperatur. Vereinfachend wird in einer weiteren Ausführung die Kühldrehzahl schrittweise angehoben. Die Anhebung kann zum Beispiel schrittweise jeweils . beim unterschreiten einer nächsttieferen kritischen Temperatur erfolgen.

Da der Temperaturverlauf während der Kühlung im wesentlichen bekannt ist, wird die Kühldrehzahl in einer weiteren Ausführung als Funktion der Zeit angehoben. Entsprechend kann die Kühldrehzahl auch schrittweise in Abhängigkeit von der Zeit angehoben werden.

Als kritisches Limit kann die Abkühlung über die Zeit selber gewählt werden oder ein durch die Abkühlung in einem Bauteil hervorgerufener Temperaturgradient.

Je nach Ausführungsform kann ein kritischer Temperaturgradient, z.B. zwischen Bauteiloberfläche und Bauteilinneren direkt gemessen werden oder aus dem Verlauf der Oberflächentemperatur über der Zeit angenähert werden. Die Änderung einer an der Oberfläche gemessenen Temperatur ist dabei proportional zur Wärmeabfuhr. Ein Temperaturgradient im Material ist weiter proportional zur Wärmeabfuhr.

In einer weiteren Ausführungsform werden mindestens zwei Funktionen zur Bestimmung der Kühldrehzahl in Abhängigkeit einer kritischen Temperatur gegeben, die zu unterschiedlichen Lebensdauerverbrauch durch das Abkühlen führen. Der Betreiber kann damit innerhalb vorgegebener Grenzen bestimmen, welchen Lebensdauerverbrauch er für das schnelle Abkühlen einsetzen will, um einen schnellen Zugang zu der Gasturbine zu ermöglichen. Je höher die gewählte Drehzahl bzw. der Drehzahlverlauf ist, desto grösser ist der Lebensdauerverbrauch. In noch einer weiteren Ausführungsform gibt der Betreiber einen zulässigen Lebensdauerverbrauch vor und der Kontrollrechner der Gasturbine fährt entlang einer entsprechenden Drehzahlkurve.

Der Antrieb der Gasturbine wird typischerweise über deren Generator, der mit Hilfe eines sogenannten "Statik Frequency Converters" als Motor betriebnen wird, realisiert.

In einer Ausführungsform weisst der Gasturbinenkontroller zeitabhängige Kurven der Solldrehzahl auf, denen er für die schnelle Kühlung folgt.

In einer weiteren Ausführungsform weisst die Gasturbine mindestens eine Temperaturmessung in mindestens einem kritischen Bauteil auf. In noch einer Ausführungsform weisst die Gasturbine mindestens ein Temperaturmessstellenpaar zur Messung eines Temperaturgradienten in mindestens einem kritischen Bauteil auf. Dies kann beispielsweise ein Temperaturmessstellenpaar sein, von denen eine auf der Bauteiloberfläche appliziert ist und eine zweite mit einem definierten Abstand unter der Oberfläche appliziert ist.

Weitere Vorteile und Ausgestaltungen der Erfindung sind in den Unteransprüchen beschrieben und ergeben sich aus der Beschreibung und den beiliegenden Zeichnungen. Alle erläuterten Vorteile sind nicht nur in den jeweils angegebenen Kombinationen, sondern auch in anderen Kombinationen oder Alleinstellung verwendbar, ohne den Rahmen der Erfindung zu verlassen.

Eine Ausführung zeichnet sich beispielsweise durch eine Gasturbine aus, die ein "Wet Compression System" zur Leistungssteigerung, wie es beispielsweise aus der EP1454044 bekannt ist, ausgerüstet ist. Dies System wir zur weiteren Beschleunigung des Abkühlvorganges ab einer Mindestdrehzahl zugeschaltet. In einer Ausführung wird die eingespritzte Wassermenge proportional zum Ansaugluftmassenstrom der Gasturbine erhöht. Vereinfacht kann dazu angenommen werden, dass der Ansaugluftmassenstrom proportional zur Drehzahl ist. Damit kann die eingespritzte Wassermenge proportional zur Drehzahl erhöht wird. Die Mindestdrehzahl zum Start der Wassereinspritzung ist typischerweise in der Grössenordnung der Kompressorwaschdrehzahl der Gasturbine.

Eine weitere Ausführungsform ist die Anwendung des Verfahrens auf eine Gasturbine mit sequentieller Verbrennung, wie sie beispielsweise aus der EP0620362 bekannt ist sowie eine Gasturbine mit sequentieller Verbrennung zur Durchführung des Verfahrens.

Wenn die Regelung der Einspritzmenge über das Zuschalten von Gruppen von Einspritzdüsen erfolgt, wird die proportionale Steigerung der Einspritzmenge stufenweise angenähert,

### Kurze Beschreibung der Zeichnungen

Die Erfindung ist anhand von Ausführungsbeispielen in den Fig. 1 bis 3 schematisch dargestellt.

Es zeigen:
Fig. 1 eine Gasturbine mit Temperaturmessungen zur Bestimmung der kritischen Temperaturen Tₖ,
Fig. 2 den beispielhaften Verlauf der Drehzahl und einer resultierenden kritischen Temperatur Tₖ über der Zeit,
Fig. 3 den beispielhaft den Verlauf der Drehzahl, um einen konstanten Gradienten in einer kritischen Temperatur Tₖ zu realisieren.

### Ausführung der Erfindung

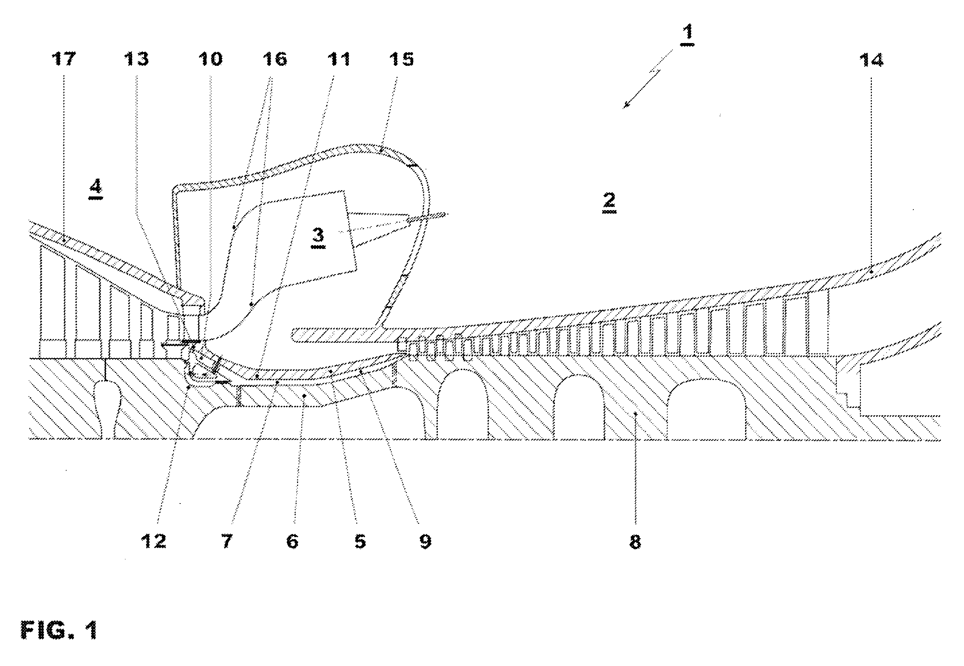

Fig. 1 zeigt schematisch eine Gasturbine zur Ausführung des erfindungsgemässen Verfahrens. Die Gasturbine 1 umfasst auf an sich bekannte Weise mindestens einen Verdichter 2, mindestens eine Brennkammer 3 und mindestens eine Turbine 4. Typischerweise ist ein Generator am kalten Ende der Gasturbine 1, dass heisst am Verdichter 2, an einen Rotor 8 angekuppelt.

Während des normalen Betriebs wird Brennstoff in der Brennkammer 3 mit im Verdichter 2 komprimierten Gasen vermischt und verbrannt. Die Heissgase werden unter Arbeitsabgabe in der nachfolgenden Turbine 4 entspannt. Dabei werden alle Komponenten, die direkt oder indirekt mit den heissen Gasen in Berührung kommen, erwärmt. Dies sind insbesondere der Rotor 8, der oft auch als Welle bezeichnet wird, die sogenannte Wellenabdeckung 5, die Brennkammer 3, die Turbine 4 sowie die Gehäuseteile der Gasturbine, d.h. Turbinengehäuse 17, Brennkammergehäuse 15 und Verdichtergehäuse 14.

Die Mittelpartie der Gasturbine, d.h. der Bereich zwischen Verdichterende und Turbineneintritt ist für eine typische Ausführungsform einer stationären Gasturbine dargestellt. Die Turbinenkühlluft für den rotierenden Teil der Turbine wird am Verdichterende entnommen, in einem Ringkanal 7 zwischen Wellenabdeckung 5 und der als Trommel 6 bezeichneten mittleren Partie des Rotors 8 an der Brennkammer 3 vorbei zur Turbine 4 geführt. Vor Eintritt in den rotierenden Teil der Turbine 4 wird die Luft über ein Drallgitter 13 mit einem Drall versehen.

Der Bereich der Trommel 6 und der sich anschliessenden Rotorscheiben sowie die Wellenabdeckung 5 sind thermisch hoch belastet. Die Erwärmung der durch den Ringkanal 7 strömenden Luft kann dabei als Mass für den Wärmeabfluss kritischer Komponenten im Mittelteil der Maschine genutzt werden. Die Erwärmung der Luft ist proportional zur abgegebnen Wärme. Die Erwärmung ist weiter umgekehrt proportional zu der den Ringraum durchströmenden Luftmenge und damit umgekehrt proportional zur Drehzahl, der Gasturbine. Die Erwärmung kann beispielsweise als Differenz aus einer Messung der Kühllufteintrittstemperatur 9 im Eintrittsbereich des Ringraums 7 und einer Messung der Kühlluftendtemperatur 10 bei Austritt aus dem Ringraum 7 bestimmt werden.

Die zulässige Kühldrehzahl n wird in einer Ausführungsform als Funktion dieser Kühllufttemperaturdifferenz bestimmt. Für eine genauere Regelung wird in einer weiteren Ausführung die zulässige Kühldrehzahl n als Funktion der Kühllufttemperaturdifferenz und der aktuellen Kühldrehzahl bestimmt.

In einer Ausführungsform wird die zulässige Kühldrehzahl n als Funktion einer der kritischen Temperatur Tₖ der Wellenabdeckung 5 bestimmt. Dafür ist in dem gezeigten Beispiel eine Messung der kritischen Temperatur der Wellenabdeckung 11 an der Wellenabdeckung 5 installiert.

In einer weiteren Ausführungsform wird die zulässige Kühldrehzahl n als Funktion einer kritischen Temperatur Tₖ des Rotors 8 bestimmt. Dafür ist in dem gezeigten Beispiel eine Messung der kritischen Temperatur des Rotors 12 an dem Rotor 8 installiert.

Je nach Bauteil kann anstelle einer kritischen Temperatur Tₖ vorteilhaft eine kritische Temperatur-Differenz im Material eines Bauteils bzw. zwischen der Oberfläche und einer Messstelle im Inneren eines Bauteils bestimmt werden, und in Abhängigkeit dieser Temperaturdifferenz die zulässige Kühldrehzahl n bestimmt werden.

Die beispielhaft genannten kritischen Temperaturen Tₖ oder Temperaturdifferenzen können einzeln oder in Kombination genutzt werden. Ausserdem können weitere kritische Temperaturen Tₖ oder Temperaturdifferenzen, wie beispielsweise Brennkammerliner- oder Gehäusetemperaturen oder Temperaturdifferenzen in einer Liner- oder Gehäusewand benutzt werden. Die sogenannten Brennkammerliner 16 sind Bauteile, die die Seiten der Brennkammer 3 begrenzen und die Strömung einer nachgeschalteten Turbine zuführen.

Zur Kombination von mehreren kritischen Temperaturen oder Temperaturdifferenzen wird typischerweise für jede zu berücksichtigende kritische Temperatur Tₖ oder Temperaturdifferenz die zugehörige zulässige Kühldrehzahl bestimmt. Die gesamtbegrenzende zulässige Kühldrehzahl n, mit der die Gasturbine abgekühlt wird, ist gleich dem Minimum aller zulässigen Kühldrehzahlen.

Die Funktion oder Abhängigkeit mit der die zulässige Kühldrehzahl bestimmt wird, kann beispielsweise als Nährungsfunktion oder in einer Tabelle gegeben sein, die im Kontrollrechner der Gasturbine hinterlegt ist.

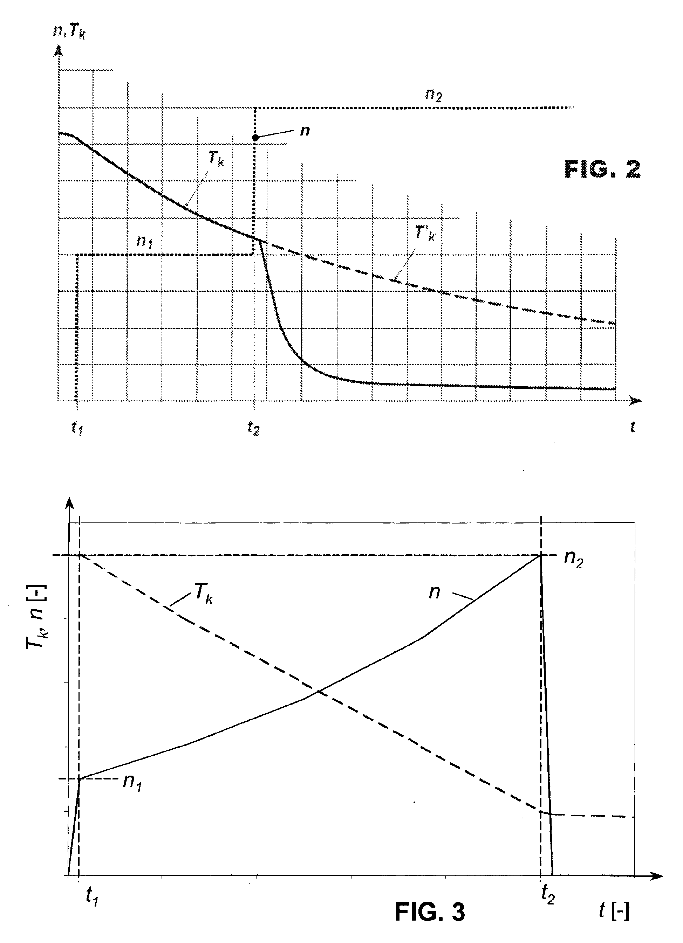

Fig. 2 zeigt schematisch den Verlauf einer normierten kritischen Temperatur *Tₖ* über der Zeit t. In dem gezeigten Beispiel wird die Gasturbine zum Kühlen ab einer Zeit t₁ mit einer konstanten normierten ersten normierten Kühldrehzahl *n₁* gedreht. Zur schnelleren Abkühlung wird die normierte Kühldrehzahl *n* ab einer Zeit t₂ auf eine zweite normierte Kühldrehzahl *n₂* erhöht. Der zugehörige normierte Temperaturverlauf *Tₖ* ist durchgezogen gezeigt. Zum Vergleich ist der normierte Temperaturverlauf *Tₖ*' gestrichelt dargestellt, der sich ergibt, wenn auch nach dem Zeitpunkt *t₂* die normierte Kühldrehzahl *n* konstant bei der normierten ersten Kühldrehzahl *n₁* gehalten wird. In der Fig. 2 ist klar zu erkennen, wie die kritische Temperatur Tₖ durch das vorgeschlagene Verfahren deutlich schneller fällt, was einfrüheres abstellen erlaubt.

Nach Erhöhung der Kühldrehzahl auf die zweite normierte Kühldrehzahl *n₂* fällt die kritische Temperatur *Tₖ* mit einem hohen Gradienten ab. Da das Bauteil bereits relativ kühl ist, kann es diesen hohen Gradienten, der deutlich höher als der zur Zeit t₁ erreichte Gradient ist, ohne zusätzliche Lebensdauereinbusse ertragen.

In dem gezeigten Beispiel ist die kritische Temperatur Tₖ mit der maximalen, am Anfang der Abkühlperiode erreichten, kritischen Temperatur normiert. Die Kühldrehzahl ist mit der maximalen, im zweiten Schritt erreichten, Kühldrehzahl n₂, normiert.

Neben einer einfachen Anhebung der normierten Kühldrehzahl in zwei Schritten ist eine Anhebung in einer Vielzahl von kleinen Schritten oder mit einem Gradienten denkbar. Dabei wird nach erreichen eines jeweiligen Temperaturlimits oder eines jeweiligen Zeitlimits die Kühldrehzahl schrittweise auf eine jeweils höhere Kühldrehzahl (nᵢ) angehoben wird und dann mit dieser höheren Kühldrehzahl (nᵢ) bis zum Erreichen des jeweils nächsten Limits gekühlt.

Fig. 3 zeigt schematisch ein weiteres Beispiel für den Verlauf einer normierten kritischen Temperatur *Tₖ* über der Zeit t. In dem hier gezeigten Beispiel wird die normierte Kühldrehzahl n von einem Ausgangswert *n₁* ausgehend über die Zeit t so angehoben, dass der Gradient mit der die normierte kritische Temperatur *Tₖ* abnimmt, konstant bleibt.

In dem gezeigten Beispiel ist die kritische Temperatur Tₖ mit der maximalen, am Anfang der Abkühlperiode erreichten, kritischen Temperatur normiert. Die Kühldrehzahl ist mit der maximalen, am Ende der Abkühlperiode erreichten Kühldrehzahl n₂, normiert.

In einer weiteren, nicht gezeigten Ausgestaltung steigt die Kühldrehzahl (n) proportional zur Zeit an, bis ein Maximalwert erreicht wird. Ab Erreichen des Maximalwertes wird die Gasturbine mit dem Maximalwert der Kühldrehzahl weiter gekühlt wird bis die Gasturbine genügend abgekühlt ist und angehalten werden kann.

### Bezugszeichenliste

- 1: Gasturbine
- 2: Verdichter
- 3: Brennkammer
- 4: Turbine
- 5: Wellenabdeckung
- 6: Rotortrommel
- 7: Ringkanal
- 8: Rotor
- 9: Kühllufteintrittstemperaturmessung
- 10: Kühlluftendtemperaturmessung
- 11: Temperaturmessung der kritischen Temperatur der Wellenabdeckung
- 12: Temperaturmessung der kritischen Temperatur des Rotors
- 13: Drallgitter
- 14: Verdichtergehäuse
- 15: Brennkammergehäuse
- 16: Brennkammerliner
- 17: Turbinengehäuse

- Tₖ: kritische Temperatur
- n: zulässige Kühldrehzahl
- n₁: erste Kühldrehzahl
- n₂: zweite Kühldrehzahl
- t: Zeit
- t₁: Beginn der Kühlung mit erster Kühldrehzahl n₁
- t₂: Beginn der Kühlung mit zweiter Kühldrehzahl n₂
- *Tₖ*: normierte kritische Temperatur
- *n*: normierte Kühldrehzahl
- *n₁*: erste normierte Kühldrehzahl
- *n₂*: zweite normierte Kühldrehzahl
- *nᵢ*: i-te normierte Kühldrehzahl
- *t*: normierte Zeit
- *t₁*: Beginn (normierte Zeit) der Kühlung mit erster Kühldrehzahl *n₁*
- *t₂*: Beginn (normierte Zeit) der Kühlung mit zweiter Kühldrehzahl *n₂*

## Patentansprüche

1. Verfahren zum Abkühlen einer Gasturbine (1), welches im Anschluss an den Betrieb der Gasturbine (1) durchgeführt wird und bei welchem ein Rotor (8) der Gasturbine (1) zum Abkühlen der Gasturbine (1) mit einer Kühldrehzahl (n) angetrieben wird, die Kühldrehzahl (n) als Funktion mindestens einer kritischen Temperatur (Tₖ), die den Lebensdauerverbrauch durch Abkühlen beeinflusst, und/ oder der Zeit (t) geregelt wird
**dadurch gekennzeichnet, dass** die Kühldrelpghl (n) proportional zur Zeit ansteigt, bis ein Maximalwert erreicht wird und dann mit dem Maximalwert der Kühldrehzahl weiter gekühlt wird oder
die Kühldrehzahl (n) zunächst auf einer ersten Kühldrehzahl (nᵢ) konstant gehalten wird, nach erreichen einer kritischen Temperatur oder einem Zeitlimit auf eine zweite Kühldrehzahl (n₂) angehoben wird und dann die Kühldrehzahl auf dieser zweiten Kühldrehzahl (n₂) konstanten gehalten wird.

2. Verfahren nach Anspruch 1, **dadurch gekennzeichnet, dass** mindestens eine kritische Temperatur (Tₖ) eine Kühllufttemperatur der Gasturbine (1) ist.

3. Verfahren nach Anspruch 1 oder 2, **dadurch gekennzeichnet, dass** aus mindestens einem Paar von kritischen Temperaturen (Tₖ) die Differenz gebildet wird und die Kühldrehzahl (n) als Funktion dieser mindestens einen Temperaturdifferenz und/ oder der Zeit (t) geregelt wird.

4. Verfahren nach einem der Ansprüche 1 bis 3, **dadurch gekennzeichnet, dass** mindestens eine kritische Temperatur (Tₖ) eine Temperatur der Wellenabdeckung (6) ist.

5. Verfahren nach einem der Ansprüche 1 bis 4, **dadurch gekennzeichnet, dass** mindestens eine kritische Temperatur (Tₖ) eine Temperatur eines Gehäuseteils (14, 15, 17) oder des Rotors (8) ist.

6. Verfahren nach einem der Ansprüche 1 bis 5, **dadurch gekennzeichnet, dass** die Kühldrehzahl (n) zunächst auf einer ersten Kühldrehzahl (n₁) konstant gehalten wird, nach erreichen eines jeweiligen Temperaturlimits oder eines jeweiligen Zeitlimits schrittweise auf eine höhere Kühldrehzahl (nᵢ) angehoben wird und dann mit dieser höheren Kühldrehzahl (nᵢ) bis zum Erreichen des jeweils nächsten Limits gekühlt wird, bis eine maximale Kühldrehzahl erreicht ist.

7. Verfahren nach einem der Ansprüche 1 bis 5, **dadurch gekennzeichnet, dass** mindestens zwei zulässige Kühldrehzahlen (n) als Funktionen von mindestens zwei kritischen Temperaturen oder Temperaturdifferenzen bestimmt werden und die Gasturbine mit der kleinsten dieser zulässigen Kühldrehzahlen (n) abgekühlt wird.

## Claims

1. Method for cooling a gas turbine (1) which is carried out after operation of the gas turbine (1) and in which a rotor or (8) of the gas turbine (1) is driven at a cooling speed (n) in order to cool the gas turbine (1), the cooling speed (n) is controlled as a function of at least one critical temperature (Tk) which influences the life consumption by cooling, and/or as a function of time (t),
**characterised in that** the cooling speed (n) rises proportionally to time until a maximum value is reached and then cooling is carried out further at the maximum value of the cooling speed, or
the cooling speed (n) is first held constant at a first cooling speed (n₁), then after reaching a critical temperature or a time limit, it is raised to a second cooling speed (n₂), and then the cooling speed is held constant at the second cooling speed (n₂).

2. Method according to claim 1, **characterised in that** at least one critical temperature (Tk) is a cooling air temperature of the gas turbine (1).

3. Method according to claim 1 or 2, **characterised in that** the difference is formed from at least one pair of critical temperatures (Tk), and the cooling speed (n) is controlled as a function of this at least one temperature difference and/or of time (t).

4. Method according to any of claims 1 to 3, **characterised in that** at least one critical temperature (Tk) is a temperature of the shaft cover (6).

5. Method according to any of claims 1 to 4, **characterised in that** at least one critical temperature (Tk) is a temperature of a casing part (14, 15, 17) or of the rotor (8).

6. Method according to any of claims 1 to 5, **characterised in that** the cooling speed (n) is first held constant at a first cooling speed (n₁), then after reaching a respective temperature limit or respective time limit, it is raised in stages to a higher cooling speed (nᵢ), and then cooling is carried out with this higher cooling speed (nᵢ) until a respective next limit is reached, continuing until a maximum cooling speed is reached.

7. Method according to any of claims 1 to 5, **characterised in that** at least two permitted cooling speeds (n) are determined as functions of at least two critical temperatures or temperature differences, and the gas turbine is cooled with the lowest of these permitted cooling speeds (n).

## Revendications

1. Procédé de refroidissement d'une turbine à gaz (1), qui est exécuté après le fonctionnement de la turbine à gaz (1) et dans lequel un rotor (8) de la turbine à gaz (1) est entraîné avec une vitesse de rotation de refroidissement (n) pour le refroidissement de la turbine à gaz (1), la vitesse de rotation de refroidissement (n) étant régulée en fonction d'au moins une température critique (Tk), qui influence la consommation sur la durée de vie par refroidissement, et/ou en fonction du temps (t),
**caractérisé en ce que** la vitesse de rotation de refroidissement (n) augmente proportionnellement au temps jusqu'à ce qu'une valeur maximale soit atteinte puis le refroidissement est continué avec la valeur maximale de la vitesse de rotation de refroidissement ou
la vitesse de rotation de refroidissement (n) est d'abord maintenue constante à une première vitesse de rotation de refroidissement (n1), augmentée à une deuxième vitesse de rotation (n2) après avoir atteint une température critique ou une limite de temps puis la vitesse de rotation de refroidissement est maintenue constante à cette deuxième vitesse de rotation de refroidissement (n2).

2. Procédé selon la revendication 1, **caractérisé en ce qu'**au moins une température critique (Tk) est une température de l'air de refroidissement de la turbine à gaz (1).

3. Procédé selon la revendication 1 ou 2, **caractérisé en ce que**, à partir d'au moins une paire de températures critiques (Tk), la différence est formée et la vitesse de rotation de refroidissement (n) est régulée en fonction de cette au moins une différence de température et/ou en fonction du temps (t).

4. Procédé selon l'une des revendications 1 à 3, **caractérisé en ce qu'**au moins une température critique (Tk) est une température de la protection d'arbre (6).

5. Procédé selon l'une des revendications 1 à 4, **caractérisé en ce qu'**au moins une température critique (Tk) est une température d'une partie de carter (14, 15, 17) ou du rotor (8).

6. Procédé selon l'une des revendications 1 à 5, **caractérisé en ce que** la vitesse de rotation de refroidissement (n) est d'abord maintenue constante à une première vitesse de rotation de refroidissement (n1), augmentée progressivement, après avoir atteint une limite de température ou d'une limite de temps, à une vitesse de rotation de refroidissement (ni) plus élevée puis le refroidissement est effectué avec cette vitesse de rotation de refroidissement (ni) plus élevée jusqu'à atteindre la limite suivante jusqu'à ce qu'une vitesse de rotation de refroidissement maximale soit atteinte.

7. Procédé selon l'une des revendications 1 à 5, **caractérisé en ce qu'**au moins deux vitesses de rotation de refroidissement (n) admissibles sont déterminées en fonction d'au moins deux températures critiques ou différences de températures et la turbine à gaz est refroidie avec la plus faible de ces vitesses de rotation de refroidissement (n) admissibles.
